# EUROPEAN PATENT APPLICATION

(11) **EP 4 564 655 A1**
(43) Date of publication of application: **04.06.2025**
(21) Application number: 22953160.3
(22) Date of filing: 29.07.2022
(51) Int. Cl.: H02K 17/16

(54) **ROTARY ELECTRIC MACHINE AND SLIT-FORMING METHOD FOR ROTOR SLOT**

(71) Applicant: Hitachi Industrial Products, Ltd., Tokyo 101-0021 (JP)
(72) Inventor: YASUNAGA, Masahiro, Tokyo 101-0021 (JP); SUGIMOTO, Shinji, Tokyo 101-0021 (JP); FUJII, Katsuhiko, Tokyo 101-0021 (JP)
(74) Representative: MERH-IP Matias Erny Reichl Hoffmann Patentanwälte PartG mbB
(86) International application number: PCT/JP2022/029232
(87) International publication number: WO 2024/024071

(57) **Abstract**

The present invention provides a rotary electric machine in which heat dissipation characteristics of the rotor are improved and temperature characteristics do not deteriorate even if a die-cast rotor is used. A rotary electric machine of the present invention comprises rotor formed of laminated electromagnetic steel sheets, and a stator placed on an outer circumference of the rotor. The rotor is a die-cast rotor to be formed so that a plurality of rotor bars is formed at a predetermined interval in a circumferential direction and a die-cast material is poured into a rotor slot extending in an axial direction. The rotor slot is an open slot in which the rotor bar is exposed from a slit formed on its outer circumference. A circumferential width of the slit is narrower than a circumferential width of the rotor bar, a side wall of the slit exposes a side surface (lamination surface) of the electromagnetic steel sheet, and the slit provides a slit groove in which a depth to an exposed part of the rotor bar is greater than a depth to a non-exposed part of the rotor bar.

## Description

### TECHNICAL FIELD OF THE INVENTION

The present invention relates to a rotary electric machine and a slit-forming method for a rotor slot, and particularly, to a rotary electric machine and a slit-forming method for a rotor slot which are appropriate for a rotary electric machine using a die-cast rotor whose rotor bar is formed by pouring a die-cast material into the rotor slot.

### BACKGROUND ART

Generally, a rotary electric machine includes a die-cast rotor whose rotor bar is formed by pouring die-cast material into a rotor slot. Rotary electric machines for rail vehicles operating at high frequencies often cause a problem of heat generated in the die-cast material composing the die-cast rotor.

To address this problem, a so-called open slot design can be used to form a slit at the top of the rotor slot in a radial direction, thereby improving cooling performance and solving the heat generation problem.

Prior art documents related to the open slot design include the following patent literature.

Patent literature 1 describes that the slot formed in the rotor has an open structure, the secondary conductor is cast into this open-structure slot, and a gas flow passage is cut, thereby making it possible to forcibly flow the gas through the gas flow passage provided for the secondary conductor, effectively cool the secondary conductor, and offer a small and efficient induction machine.

### DOCUMENT LIST

### PATENT DOCUMENT

Patent Literature **1:** JP Hei 7(1995)-115742 A

### SUMMARY OF INVENTION

### TECHNICAL PROBLEM

In a rotary electric machine using a die-cast rotor, when an open slot is used to relax the rotor temperature, it is important to secure a ventilation flue to the slit formed in the rotor slot.

According to the above-described Patent Literature 1, the amount of ventilation to the slit is secured by providing a vane for the short-circuit ring on the axial end face of the rotor.

However, according to the technology described in Patent Literature 1, for the rotary electric machine assumed to operate at high frequency, since the vane is provided for the short-circuit ring on the axial end face of the rotor, issues are raised for the air resistance generated on an outer wall of the ventilation flue and the resulting stress concentration on the end.

When a rotor slit is created without changing the opening dimension in the rotary electric machine using the die-cast rotor, the die-cast material remains on the outer wall of the ventilation passage, and current flows through the remaining die-cast material, causing a problem of causing heat generation and associated losses to be higher than expected before the fabrication.

The present invention has been made in consideration of the above points. The first object of the present invention is to provide a rotary electric machine in which the heat dissipation characteristics of the rotor are improved and the temperature characteristics do not deteriorate even if a die-cast rotor is used.

The second object of the present invention is to provide a slit-forming method for a rotor slot capable of suppressing an occurrence of excessive loss that may occur due to the concentration of alternating currents caused by a skin effect.

### SOLUTION TO PROBLEM

To achieve the above-described first object, a rotary electric machine according to the present invention includes a rotor formed of laminated electromagnetic steel sheets; and a stator placed on an outer circumference of the rotor, wherein the rotor is a die-cast rotor to be formed so that a plurality of rotor bars is formed at a predetermined interval in a circumferential direction and a die-cast material is poured into a rotor slot extending in an axial direction; wherein the rotor slot is an open slot in which the rotus bar is exposed from a slit formed on its outer circumference; and wherein a circumferential width of the slit is narrower than a circumferential width of the rotor bar, a side wall of the slit exposes a side surface (lamination surface) of the electromagnetic steel sheet, and the slit provides a slit groove in which a depth to an exposed part of the rotor bar is greater than a depth to a non-exposed part of the rotor bar.

To achieve the above-described second object, a slit-forming method for rotor slot according to the present invention, the rotor slot being an open slot to expose a rotor bar from a slit formed in an outer circumference of the rotor slot, the rotor bar being included in a rotor, the rotor being formed by laminating electromagnetic steel sheets, including a plurality of rotor bars formed at predetermined intervals in a circumferential direction, and being a die-cast rotor formed by pouring a die-cast material into an axially extending rotor slot, the method for forming the slit in the outer circumference of the rotor slot, comprising: forming the rotor slot having an opening; pouring the die-cast material into the rotor slot to form the rotor bar; cutting an outer circumference of the rotor; and cutting the opening wider than a circumferential dimension of the opening to form a slit in the outer circumference of the rotor slot.

### ADVANTAGEOUS EFFECTS OF INVENTION

The present invention provide a rotary electric machine that improves the heat dissipation characteristics of the rotor without degrading temperature characteristics even if a die-cast rotor is used, and also provides a slit-forming method for a rotor slot that inhibits an occurrence of excessive loss due to alternating current concentration caused by a skin effect.

### BRIEF DESCRIPTION OF DRAWINGS

FIG. 1 is a cross-sectional view illustrating the upper half of an electric motor according to the first embodiment of the rotary electric machine of the present invention.
FIG. 2(a) is a cross-sectional view of the end of an end ring in a conventional electric motor and also provides an enlarged view of part A in FIG. 1.
FIG. 2(b) is a cross-sectional view of an end ring slit viewed from the direction of arrow C in FIG. 2(a).
FIG. 3(a) is a cross-sectional view of the end of an end ring in the electric motor according to the first embodiment of the rotary electric machine of the present invention, and also provides an enlarged view of part A in FIG. 1.
FIG. 3(b) is a cross-sectional view of the end ring slit viewed from the direction of arrow C in FIG. 3(a).
FIG. 4 is a diagram illustrating a slit-forming method for a rotor slot in a conventional electric motor.
FIG. 5 is a diagram illustrating a slit-forming method for a rotor slot in an electric motor according to the first embodiment of the rotary electric machine of the present invention.

### DESCRIPTION OF EMBODIMENTS

A rotary electric machine and a slit-forming method for a rotor slot of the present invention will be described below based on the illustrated embodiment. The same components are designated by the same reference numerals in the drawings.

### FIRST EMBODIMENT

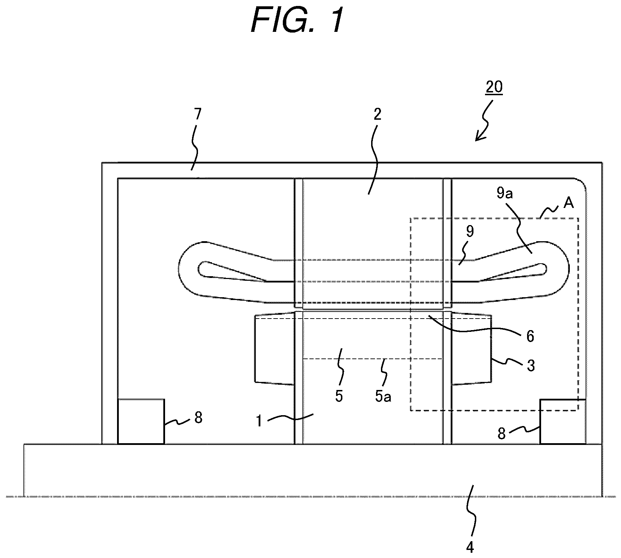

FIG. 1 is a cross-sectional view illustrating the upper half of an electric motor according to the first embodiment of the present invention.

The rotary electric machine according to the present embodiment illustrated in FIG. 1 is an electric motor 20, which includes a rotor 1 fixed to a rotating shaft 4 and a stator 2 that is positioned in a radial direction of the rotor 1 and covers the outer periphery of the rotor 1 with a predetermined gap.

As is well known, a current applied to a stator coil 9 of the stator 2 provides the rotor 1 with a rotational force and rotates the rotating shaft **4.** A casing 7 is attached to the rotating shaft 4 via a bearing **8.**

The rotor 1 described above has a structure of laminated electromagnetic steel sheets that are fastened with bolts (not shown) to maintain the laminated shape.

The rotor 1 includes rotor slots 5a that are cut at a certain depth from the outer circumference toward the inner circumference, maintain a predetermined interval in the circumferential direction, and extend in the axial direction. Each of rotor bars 5 is exposed from a slit 6 formed on the outer circumference of the rotor 1, providing a so-called open slot structure.

The rotor bar 5 is provided for each rotor slot 5a. An annular end ring 3 connects and short-circuits the rotor bars 5 at the axial end face of the rotor 1.

The rotor bar 5 described above is formed by pouring a die-cast material into the rotor slot 5a. The rotor 1 is a die-cast rotor including the rotor bar 5 described above.

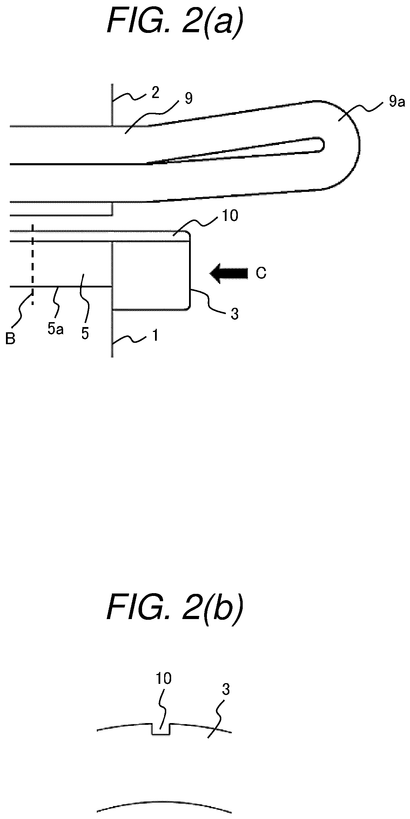

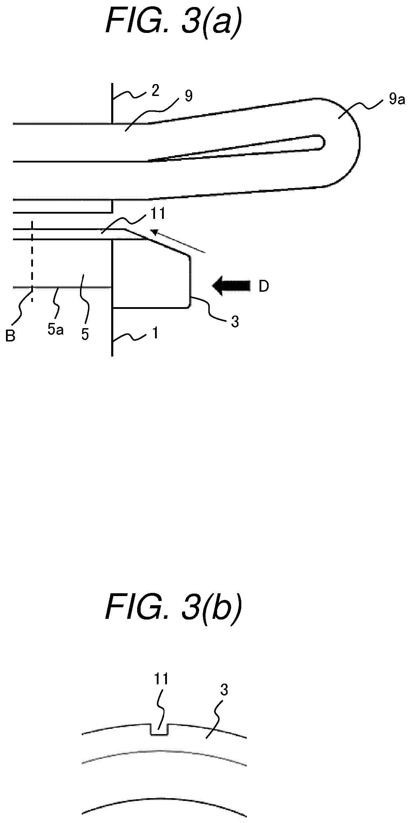

Here, a configuration of a conventional electric motor illustrated in FIGS. 2(a) and 2(b) as cross-sectional views of an enlarged part A in FIG. 1, and a configuration of the electric motor 20 according to the present embodiment illustrated in FIGS. 3(a) and 3(b) are described.

FIG. 2(a) is an enlarged cross-sectional view of the end of the end ring 3 in the configuration in a conventional electric motor. FIG. 2(b) is a cross-sectional view of a slit 10 of the end ring 3 viewed from the direction of arrow C in FIG. 2(a).

FIG. 3(a) is an enlarged cross-sectional view of the end of the end ring 3 in the configuration of an electric motor 20 of the present invention. FIG. 3(b) is a cross-sectional view of a slit 11 of the end ring 3 viewed from the direction of arrow D in FIG. 3(a).

As illustrated in FIGS. 2(a) and 3(a), in the stator 2, the stator coils 9 are placed discretely in the circumferential direction to partly protrude from the stator 2 in the axial direction. The end ring 3 rotates between the protruding part (coil end 9a) of the stator coil 9 and the rotating shaft 4 (in the radial direction).

The end ring 3 according to the present embodiment illustrated in FIG. 3(a) is formed in a forward tapered structure that gradually increases the distance between the end ring 3 and the coil end 9a of the stator 2 toward the axial end. The forward tapered structure of the end ring 3 increases the space between the end of the end ring 3 and the end of the stator coil 9 (between the end ring 3 and the coil end 9a), generating an airflow along the end ring 3 and increasing the amount of air flowing into the gap between the rotor 1 and the stator 2.

The configuration of a conventional electric motor illustrated in FIG. 2(a) has a structure that the slit 10 is simply cut to the end and causes major problems of air resistance occurring on the outer wall of the slit 10 due to counterflowing wind and the associated concentration of stresses when used in high-speed rotations such as motors for railway vehicles.

However, as the configuration of the electric motor 20 according to the present embodiment illustrated in FIG. 3(a), when the slit 11 being an extension of the forward tapered structure formed on the end ring 3 also has a forward tapers structure,, it is possible to minimize the occurrence of air resistance and stress because the length of the slit 11 in the end ring 3 is shortened, the area of the outer wall of the slit 11 decreased, and the effect of the counterflowing wind reduced compared to the case where the end ring 3 has no forward tapered structure as is illustrated in FIG. 2(a).

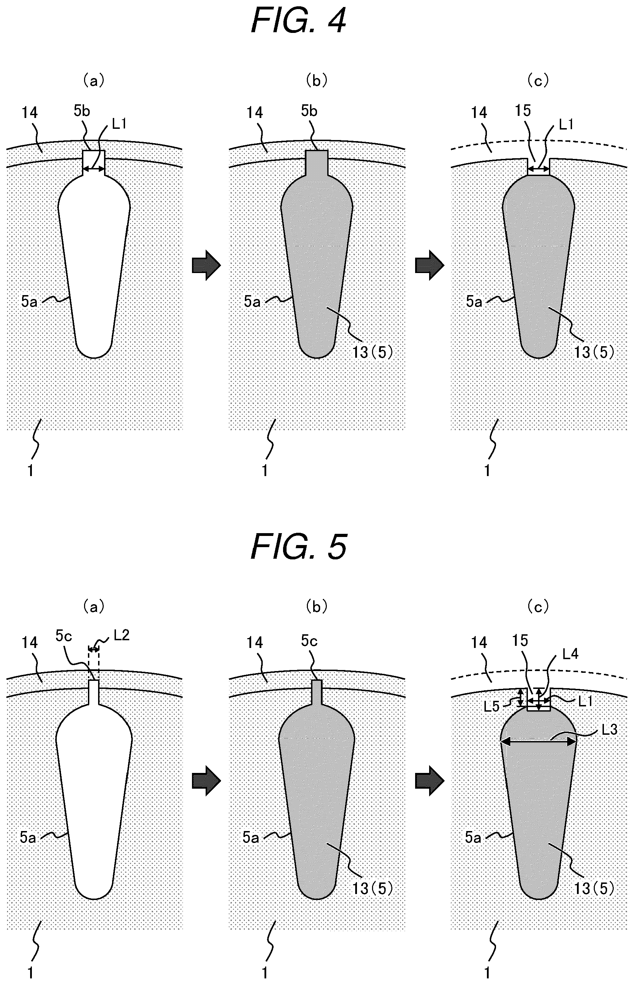

The rotor bar 5 inside the rotor slot 5a on the outer circumference of the rotor 1 in the electric motor 20 according to the present embodiment is integrally molded through die casting. As illustrated in FIG. 5(c), the circumferential dimension (L1) of a slit 15 is smaller than the width (circumferential dimension L3) of the rotor bar 5. The side wall of the slit 15 is machined to expose the side surface (lamination surface) of the electromagnetic steel sheet.

This is because the slit 15 is cut to have a width (L1) wider than the width (L2) of an opening 5c (see FIG. 5) of the rotor slot 5a before machining, as will be described later.

In electric motors ta such as vehicle motors that require INV driving at high frequencies, high-frequency alternating currents tend to concentrate on the surface due to the skin effect.

FIGS. 4(a), (b), and (c) illustrate that the slit 15 is formed to have the dimension (L1) of the opening 5b formed in the rotor slot 5a. In this case, the die-cast material poured into the rotor slot 5a remains partially on the side wall of the slit 15, the current flowing through the remaining die-cast material due to the skin effect, an excessive loss occurring on that part, and then the temperature characteristics of the electric motor degraded.

According to the present embodiment, as illustrated in FIGS. 5 (a), (b), and (c), the slit 15 is cut to the width (L1) greater than the width (L2) of the opening 5c of the rotor slot 5 before machining and the laminated structure of the electromagnetic steel sheets of the rotor 1 is exposed so that the die-cast material does not remain on the side of the slit 15. Consequently, the die-cast material does not stay on the side wall of the slit 15, and no current flows through the die-cast material. Therefore, no excessive loss occurs and there is no risk of degrading the temperature characteristics of the electric motor 20.

Furthermore, as illustrated in FIG. 5(c), the slit 15 is machined to be a slit groove so that the depth to the exposed part of the rotor bar 5 is greater than the depth to the non-exposed part of the rotor bar **5.** Namely, the slit 15 is machined to be a slit groove so that the distance (L4) of the slit 15 to the exposed part of the rotor bar 5 is longer (deeper) than the distance (L5) to the non-exposed part of the rotor bar **5.**

As will be described later, this is because a machining tool is advanced with an amount larger than the depth of the slit 15 for cutting.

The flow passage cross-section of the slit 15 is increased by providing the slit groove whose depth to the exposed part of the rotor bar 5 is greater than the depth to the non-exposed part of the rotor bar 5, resulting in increasing the amount of ventilation and the surface area of the slit 15, and improving the heat dissipation efficiency.

In addition, a groove extending from the slit 6 is a slit to the end ring 3 to form a ventilation passage even for the end ring 3, making it possible to significantly improve the amount of ventilation.

Next, the slit-forming method for the rotor slot 5a according to the present embodiment is explained.

The slit-forming method for the rotor slot 5a according to the present embodiment, the rotor slot 5a being an open slot to expose a rotor bar 5 from a slit 15 formed in an outer circumference of the rotor slot 5a, the rotor bar 5 being included in a rotor 1, the rotor 1 being formed by laminating electromagnetic steel sheets, including a plurality of rotor bars 5 formed at predetermined intervals in a circumferential direction, and being a die-cast rotor formed by pouring a die-cast material into an axially extending rotor slot 5a, the method for forming the slit 15 in the outer circumference of the rotor slot 5a, comprises forming the rotor slot 5a having an opening 5c, pouring the die-cast material into the rotor slot 5a to form the rotor bar 5, cutting an outer circumference of the rotor 1, and cutting the opening 5c by the circumferential dimension (L1) wider than a circumferential dimension (L2) of the opening 5c to form a slit 15 in the outer circumference of the rotor slot 5a.

The slit-forming method for the rotor slot 5a according to the present embodiment is described below by using FIGS. 5 (a), (b), and (c) in comparison with a conventional slit-forming method for the rotor slot 5a illustrated in FIGS. 4 (a), (b), and (c).

FIGS. 4 (a), (b), and (c) illustrate a conventional method of forming the slit in the rotor slot 5a to leave die-cast material in the opening 5b and show the state of the broken-line part B in FIG. 2 (a) viewed from the end ring 3 in each process.

As illustrated in FIG. 4 (a), the rotor slot 5a is fabricated to include the opening 5b having circumferential dimension (L1) at the top. Then, as illustrated in FIG. 4 (b), the die-cast material 13 is poured into the rotor slot 5a to form the rotor bar 5. As illustrated in FIG. 4 (c), the rotor periphery 14 is cut, and then the slit 15 having circumferential dimension (L1) is formed to match the circumferential dimension (L1) of the opening 5b.

In the conventional method of forming the slit, the slit 15 is formed corresponding to the circumferential dimension (L1) of the opening 5b, causing a small amount of die-cast material to remain in the opening 5b.

FIGS. 5 (a), (b), and (c) are drawings illustrating the slit-forming method for the rotor slot 5a according to the present embodiment, which does not leave die-cast material in the opening 5c. The drawings show the state of the broken-line part B in FIG. 3(a) viewed from the end ring 3 in each process.

As illustrated in FIG. 5 (a), the rotor slot 5a is fabricated to include the opening 5c having circumferential dimension (L2) at the top. Then, as illustrated in FIG. 5 (b), the die-cast material 13 is poured into the rotor slot 5a to form the rotor bar 5. As illustrated in FIG. 5 (c), the rotor periphery 14 is cut, and then the opening 5c is cut wider than the circumferential dimension (L2) of the opening 5c to form the slit 15 having the circumferential dimension (L1).

In the present embodiment, which describes the method to form the slit 15 by cutting with the circumferential dimension (L1) wider than the opening 5c, no die-cast material 13 is left on the surface of the opening 5c and it is possible to suppress the occurrence of excessive loss that may occur due to the concentration of alternating currents caused by the skin effect.

Therefore, in the present embodiment, the electric motor 20 can be obtained that improves the heat dissipation characteristics of the rotor 1 without degrading temperature characteristics even if a die-cast rotor is used. The present embodiment provides the slit-forming method for the rotor slot 5a that can inhibit the occurrence of excessive loss due to the concentration of alternating currents caused by the skin effect.

It should be noted that the present invention is not limited to the embodiments described above, and includes various modifications. For example, the embodiments described above have been described in detail to simply describe the present invention, and are not necessarily required to include all the described configurations. In addition, part of the configuration of one embodiment can be replaced with the configurations of other embodiment, and in addition, the configuration of the one embodiment can also be added with the configurations of other embodiments. In addition, part of the configuration of each of the embodiments can be subjected to addition, deletion, and replacement with respect to other configurations.

### LIST OF REFERENCE CHARACTERS

1: rotor, 2: stator, 3: end ring, 4: rotating shaft, 5: rotor bar, 5a: rotor slot, 5b, 5c: opening of rotor slot, 6, 15: slit, 7: casing, 8: bearing, 9: stator coil, 9a: coil end, 10: conventional end ring slot, 11: end ring slot in present embodiment, 13: die-cast material, 14: rotor periphery, 20: electric motor

## Claims

1. A rotary electric machine comprising:
a rotor formed of laminated electromagnetic steel sheets; and
a stator placed on an outer circumference of the rotor,
wherein the rotor is a die-cast rotor to be formed so that a plurality of rotor bars is formed at a predetermined interval in a circumferential direction and a die-cast material is poured into a rotor slot extending in an axial direction;
wherein the rotor slot is an open slot in which the rotor bar is exposed from a slit formed on its outer circumference; and
wherein a circumferential width of the slit is narrower than a circumferential width of the rotor bar, a side wall of the slit exposes a side surface (lamination surface) of the electromagnetic steel sheet, and the slit provides a slit groove in which a depth to an exposed part of the rotor bar is greater than a depth to a non-exposed part of the rotor bar.

2. The rotary electric machine according to claim 1,
wherein an end ring is provided at both axial ends of the rotor, and a groove extending from the slit is also formed in the end ring.

3. The rotary electric machine according to claim 2,
wherein the end ring forms a forward tapered structure in which a distance between the end ring and a coil end of the stator gradually increases toward an axial end.

4. The rotary electric machine according to claim 3,
wherein the slit being an extension of the forward tapered structure formed on the end ring also has the forward tapered structure.

5. A slit-forming method for rotor slot, the rotor slot being an open slot to expose a rotor bar from a slit formed in an outer circumference of the rotor slot, the rotor bar being included in a rotor, the rotor being formed by laminating electromagnetic steel sheets, including a plurality of rotor bars formed at predetermined intervals in a circumferential direction, and being a die-cast rotor formed by pouring a die-cast material into an axially extending rotor slot, the method for forming the slit in the outer circumference of the rotor slot, comprising:
forming the rotor slot having an opening;
pouring the die-cast material into the rotor slot to form the rotor bar;
cutting an outer circumference of the rotor; and
cutting the opening wider than a circumferential dimension of the opening to form a slit in the outer circumference of the rotor slot.
